# EUROPÄISCHE PATENTSCHRIFT

(11) **EP 2 481 644 B1**
(45) Veröffentlichungstag und Bekanntmachung des Hinweises auf die Patenterteilung: **22.03.2017**
(21) Anmeldenummer: 12000227.4
(22) Anmeldetag: 17.01.2012
(51) Int. Cl.: B60R 21/34, B62D 25/14, B60K 37/00

(54) **Anordnung einer Instrumententafel im Innenraum eines Kraftfahrzeuges**
Assembly of an instrument panel in the interior of a motor vehicle
Agencement d'un tableau d'instrument dans l'espace intérieur d'un véhicule automobile

(30) Priorität: 27.01.2011 DE 102011009605
(43) Veröffentlichungstag der Anmeldung: 01.08.2012
(73) Patentinhaber: Audi AG, 85045 Ingolstadt (DE)
(72) Erfinder: Klinkert, Carsten, 85122 Hitzhofen (DE); Färnstrand, Henrik, 81541 München (DE); Nonnenbroich, Klaus, 85084 Reichertshofen (DE); Haumer, Robert, 93333 Neuburg (DE); Malisi, Peter, 85049 Ingolstadt (DE); Rochow, Torben, 85049 Ingolstadt (DE); Berleb, Boris, 85114 Buxheim (DE)
(74) Vertreter: Engelhardt, Harald

(56) Entgegenhaltungen:
- EP-A1- 1 810 892
- WO-A1-2010/146306
- DE-B3-102006 031 396
- JP-A- 2005 035 325
- JP-A- 2010 036 853

## Beschreibung

Die Erfindung betrifft eine Anordnung einer Instrumententafel im Innenraum eines Kraftfahrzeuges, insbesondere eines Personenkraftfahrzeuges, gemäß dem Oberbegriff des Patentanspruches 1.

Eine gattungsgemäße Ausbildung einer Instrumententafel eines Cockpit-Moduls beschreibt die DE 10 2006 031 396 B3, bei der ein im Bereich außenliegender Scheibenwischer (ein deren Parkposition) endender, quer verlaufender Defrosterkanal teilweise zwischen der angrenzenden Windschutzscheibe und einer Ausnehmung in einer auf den betreffenden Querträger aufgebrachten Dämmstoffschicht ausgebildet ist. Die Instrumententafel ist durch die darunter angeordneten, mit der oberen Abdeckung fest verbundenen Kanalführungen unter anderem für konditionierte Luft entsprechend steif ausgebildet.

Aufgabe der Erfindung ist es, eine Anordnung einer Instrumententafel im Innenraum eines Kraftfahrzeuges vorzuschlagen, die im Anschlussbereich an die Windschutzscheibe so ausgeführt ist, dass ein verbesserter Aufprallschutz für Fußgänger gegeben ist.

Diese Aufgabe wird gelöst durch die Merkmale des Patentanspruchs 1. Vorteilhafte und besonders zweckmäßige Weiterbildungen der Erfindung sind Gegenstand der Unteransprüche.

Gemäß Anspruch 1 wird eine Anordnung einer Instrumententafel im Innenraum eines Kraftfahrzeuges, insbesondere eines Personenkraftfahrzeuges, vorgeschlagen, bei der die an eine Windschutzscheibe angrenzende Instrumententafel im windschutzscheibennahen Bereich in Fahrzeughochachsenrichtung gesehen oberhalb einer Dämmstoffschicht, insbesondere oberhalb eines mit einer Dämmstoffschicht versehenen Scheibenquerträgers verläuft, wobei in Fahrzeughochachsenrichtung gesehen unterhalb der Instrumententafel wenigstens ein in Fahrzeugquerrichtung verlaufender Defrosterkanal ausgebildet ist, mittels dem der Windschutzscheibe über wenigstens eine der Windschutzscheibe zugeordnete Ausströmöffnung Luft zuführbar ist. Erfindungsgemäß ist ein der Windschutzscheibe zugewandter und einen Defrosterkanal-Wandbereich ausbildender Abschnitt der Instrumententafel als ein sich an die wenigstens eine Ausströmöffnung, in Richtung von der Windschutzscheibe weg anschließende, den Kanaihohlraum des Defrosterkanals überdeckender und bei einer Kraftbeaufschlagung nach unten, in Richtung von der Windschutzscheibe weg, um eine definierte, instrumententafelseitige Schwenkachse verschwenkbarer bzw. abklappbarer und/oder abknickbarer Wandabschnitt der Instrumententafel ausgebildet.

Durch diese Ausbildung wird erreicht, dass bei einer Kollision mit einem Fußgänger bei nachgebender Windschutzscheibe im Kopfaufprallbereich über die ebenfalls nachgebende bzw. im vorderen Bereich nach unten abknickende Instrumententafel Aufprallenergie absorbiert bzw. die Verletzungsgefahr vermindert wird. Zudem wird die Instrumententafel als solche baulich vereinfacht, indem Abschnitte der Dämmstoffschicht bzw. des mit Dämmstoffschicht umkleideten Querträgers und der Instrumententafel zugleich als Luftführungswände dienen. Die gezielte Verschwenkbarkeit bzw. Nachgiebigkeit des verschwenkbaren Wandabschnittes der Instrumententafel wird hier somit insbesondere dadurch sichergestellt, dass dieser Wandabschnitt in horizontaler Richtung gesehen im Wesentlichen frei nach vorne in Richtung Windschutzscheibe ragt bzw. keine aussteifenden, vertikalen Kanalwände angebunden oder vorgesehen sind, die das Verschwenken des Wandabschnittes in den Kanalhohlraum hinein beeinträchtigen oder behindern können. Daraus resultiert zudem eine bauliche Vereinfachung der Instrumententafel in dem betreffenden Abschnitt.

Besonders bevorzugt ist eine Ausgestaltung, bei der der Defrosterkanal auf seiner der Windschutzscheibe abgewandten Seite von einer in Fahrzeughochachsenrichtung nach unten abragenden Abstützstrebe der Instrumententafel begrenzt ist, an der sich nach vorne zur Windschutzscheibe hin der verschwenkbare und in etwa horizontal verlaufende Wandabschnitt anschließt, wobei die Schwenkachse des verschwenkbaren Wandabschnittes im Anbindungsbereich des verschwenkbaren Wandabschnittes an der Abstützstrebe ausgebildet ist oder dort bei einer Kraftbeaufschlagung desselben ausbildbar ist. Die Schwenkachse verläuft dabei in etwa horizontal und nahezu über die gesamte Breite der Instrumententafel. Die Schwenkachse kann grundsätzlich erst bei einer entsprechenden Kraftbeaufschlagung im Anbindungs- bzw. Übergangsbereich vom verschwenkbaren Wandabschnitt an bzw. in die vertikale Abstützstrebe ausgebildet werden. Gegebenenfalls könnte die Schwenkachse alternativ oder zusätzlich aber auch durch materialschwächende Maßnahmen im besagten Anbindungs- bzw. Übergangsbereich gebildet oder unterstützt sein. Die Abstützstrebe versteift die Instrumententafel und dient weiter der gezielten Anbindung des verschwenkbaren Wandabschnittes sowie der definierten Ausbildung der Schwenkachse.

In Verbindung mit der Abstützstrebe ist ferner eine Ausgestaltung vorteilhaft, bei der die Abstützstrebe mit einem dem verschwenkbaren Wandabschnitt abgewandten Abstützbereich an die beabstandet unterhalb des verschwenkbaren Wandabschnittes verlaufende und ebenfalls einen Defrosterkanalwandbereich ausbildende Dämmstoffschicht des Scheibenquerträgers angrenzt. Die Abstützstrebe dient hier somit in einer weiteren Funktion gleichzeitig auch als Kanalwand. Insgesamt gesehen ist der Defrosterkanal hier somit zwischen dem verschwenkbaren Wandabschnitt der Instrumententafel, der Abstützstrebe und der Dämmstoffschicht ausgebildet.

Die im Querschnitt bevorzugt in etwa U-förmig ausgebildete Abstützstrebe der Instrumententafel ist mit einem bezogen auf die Fahrzeughochachsenrichtung unteren Abstützbereich an der Dämmstoffschicht des Scheibenquerträgers abgestützt. Durch die U-förmige Ausgestaltung wird auf einfach herstellbare Weise ein stabiler Aufbau der Abstützstrebe zur Verfügung gestellt, der ohne großen Materialaufwand herzustellen ist.

Der untere Abstützbereich der Abstützstrebe kann dagegen zum Beispiel im Querschnitt L-förmig mit einem nach unten abragenden Schenkel ausgeführt sein, der an einer in etwa vertikalen Außenkontur eines querverlaufenden Eckbereichs der Dämmstoffschicht des Scheibenquerträgers anliegt. Dies ermöglicht neben einer zuverlässigen Montage der Instrumententafel ein gezieltes nach hinten "Abweisen" der Abstützstrebe an dem Scheibenquerträger bzw. deren Dämmstoffschicht bei einer von oben wirkenden Aufprallkraft.

Weiter ist bevorzugt vorgesehen, dass zwischen der Abstützstrebe und der Dämmstoffschicht ein den Defrosterkanal abdichtendes Dichtprofil eingesetzt ist, um eine Luftdichtheit sicherzustellen. Beispielsweise kann die Abstützstrebe über ein elastisches Dichtprofil mit der Dämmstoffschicht verklebt sein. Die Klebeschicht stellt eine ausreichende Betriebsfestigkeit und eine schwingungsresistente Abstützung der Instrumententafel bei einer montagetechnisch einfachen Ausführung her.

Gemäß einer konkreten Ausgestaltung ist vorgesehen, dass der verschwenkbare Wandabschnitt Bestandteil einer Trag- und/oder Unterstruktur der Instrumententafel ist, die bevorzugt materialeinheitlich und/oder einstückig und/oder mit einer flächigen Abdeckung ausgebildet ist. Eine derartige Abdeckung kann zum Beispiel als obere, flächige Abdeckung der Instrumententafel durch Kleben, Kunststoffschweißen, etc. angebunden sein. Als Material für die Trag- und/oder Unterstruktur eignet sich insbesondere ein Kunststoffmaterial. Auch der Einsatz eines Blechmaterials als Trag- und/oder Unterstruktur ist selbstverständlich möglich.

In vorteilhafter Weiterbildung der Erfindung kann vorgesehen sein, dass in einem definierten Abstand von der Abstützstrebe ein, bezogen auf die Anordnung der Windschutzscheibe, hinter der Abstützstrebe angeordneter weiterer Luftkanal, insbesondere ein zweiter Defrosterkanal, für eine Luftzuführung zur Windschutzscheibe vorgesehen ist, wobei in einem Übergangsbereich von einem hinter der Abstützstrebe liegenden, zweiten, flächigen Wandabschnitt der Instrumententafel und dem weiteren Luftkanal eine zweite Schwenkachse ausgebildet ist oder dort ausbildbar ist, um die der in Richtung zur Windschutzscheibe davor liegende Bereich der Instrumententafel als verschwenkbarer Wandabschnitt bei einer definierten Kraftbeaufschlagung der Instrumententafel, insbesondere bei höheren Aufprallkräften und/oder bei einer kraftbedingt nachgebenden Abstützstrebe, nach unten, in Richtung von der Windschutzscheibe weg, verschwenkbar ist. Ein derartiger Aufbau ermöglicht eine gezielt gestaffelte Nachgiebigkeit der Instrumententafel mit weiterer Absorption möglicher Aufprallkräfte.

Eine weitere, baulich einfache Steuerung des Verformungsverhaltens der Instrumententafel wird dadurch erzielt, dass zwischen den einander zugewandten Vertikalwänden der Abstützstrebe und des weiteren Luftkanals wenigstens ein Verbindungssteg angeordnet ist, der eine definierte Aussteifung der zeitlich hintereinander abklappbaren Abschnitte der Instrumententafel ermöglicht. Dabei ist bevorzugt vorgesehen, dass der wenigstens eine Verbindungssteg integraler Bestandteil einer zuvor bereits erläuterten Trag- und/oder Unterstruktur der Instrumententafel ist.

Weiter kann bevorzugt vorgesehen sein, dass die Abstützstrebe und/oder der weitere Luftkanal an die Trag- und/oder Unterstruktur der Instrumententafel angebunden ist bzw. sind, vorzugsweise aus- und/oder angeformter integraler Bestandteil der Trag- und/oder Unterstruktur der Instrumententafel ist bzw. sind. Dies ist herstellungstechnisch einfach herstellbar, wobei zudem die Bauteilvielfalt reduziert wird, was sich wiederum vorteilhaft auf die Montagezeit auswirkt.

Weiter ist bevorzugt eine sich in Richtung zur Windschutzscheibe hin an die wenigstens eine Ausströmöffnung anschließend sowie quer verlaufende Randleiste vorgesehen, die Bestandteil der Instrumententafel ist und die an einer nach vorne zur Windschutzscheibe hin ausgerichteten und/oder dort unmittelbar oder mit einem definierten Spaltabstand angrenzenden Randwulst der Dämmstoffschicht abgestützt ist. Dadurch kann eine zusätzliche Stabilisierung der Instrumententafel im Bereich der Windschutzscheibe bewirkt werden. Dabei kann insbesondere ein abgewinkelter Randbereich des Abschnittes der Instrumententafel über ein elastisches Dichtprofil an dem Bereich der Dämmstoffschicht formschlüssig und/oder über eine Klebeverbindung fest abgestützt sein. Die Verbindung ist so ausgeführt, dass sie sich bei einer auftretenden Aufprallkraft problemlos löst.

Ein Ausführungsbeispiel der Erfindung ist im Folgenden anhand der beigefügten, schematischen Zeichnung näher erläutert, die einen senkrechten Mittellängsschnitt durch eine nur teilweise dargestellte Instrumententafel für Personenkraftfahrzeuge zeigt, die im Innenraum hinter dem unteren Rand einer Windschutzscheibe angeordnet ist und die Ausströmöffnungen für konditionierte Luft als Defrostereinrichtung aufweist.

Die Erfindung wird nachfolgend anhand einer Zeichnung näher erläutert.

Es zeigen:
- Fig. 1: schematisch einen Querschnitt durch eine beispielhafte Ausführungsform einer erfindungsgemäßen Anordnung im Ruhebzw. Grundzustand,
- Fig. 2: schematisch eine Darstellung gemäß Fig. 1 bei einer ersten Aufprallsituation, und
- Fig. 3: schematisch eine Dar stellung gemäß Fig. 1 bei einer zweiten Aufprallsituation.

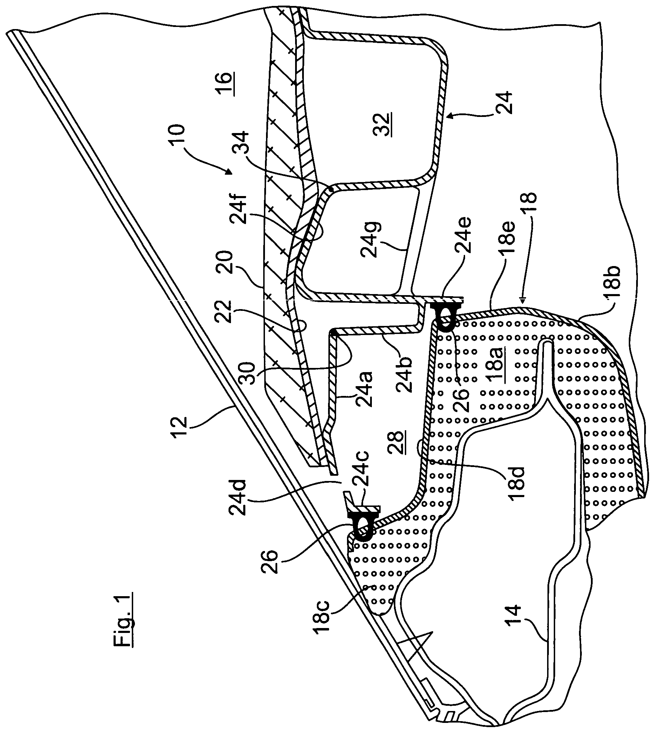

In der Fig. 1 ist die Instrumententafel mit 10 bezeichnet, die nur soweit dargestellt ist, als dies für das Verständnis der vorliegenden Erfindung erforderlich ist. Im Übrigen kann die Instrumententafel 10 dem Stand der Technik entsprechend ausgeführt sein bzw. im Verbund mit einer Mittelkonsole ein Cockpit-Modul bilden.

Die Instrumententafel 10 erstreckt sich mit ihrem vorderen Randbereich bis an den unteren Bereich einer schräg nach oben hinten ausgerichteten Windschutzscheibe 12, die unter anderem an einem unterhalb der Instrumententafel 10 verlaufenden, ein geschlossenes Hohlprofil aufweisenden Scheibenquerträger 14 befestigt ist.

Der Scheibenquerträger 14 erstreckt sich über die gesamte Breite der Windschutzscheibe 12 bzw. ist an einer nicht dargestellten, nach unten verlaufenden Stirnwand und an seitlichen Pfosten A der Karosseriestruktur des Personenkraftfahrzeuges befestigt.

Die Stirnwand und der Scheibenquerträger 14 sind an ihren dem Innenraum 16 zugewandten Oberflächen mit einer Dämmstoffschicht 18 verkleidet, die sich in bekannter Weise aus einer Schaumstruktur 18a und einer Schwerstoffschicht 18b zusammensetzt und die von außen bzw. vom Motorraum ausgehende Geräusche und Schwingungen dämpft.

Der dargestellte Bereich der Instrumententafel 10 setzt sich aus einer äußeren, optisch ansprechenden Außenhaut bzw. Verkleidung 20, einer im Wesentlichen flächigen, horizontal ausgerichteten Abdeckung 22 und einer daran befestigten, tragenden Trag- bzw. Unterstruktur 24 aus einem Kunststoffmaterial zusammen. Die vorzugsweise materialeinheitlich und/oder einteilig ausgeführte Unterstruktur 24 ist mit der darüber liegenden Abdeckung 22 durch Kleben, Kunststoffschweißen, etc. fest verbunden.

Die Unterstruktur 24 weist einen vorderen, in Nähe der Windschutzscheibe 12 endenden, horizontal und quer über die Breite der Windschutzscheibe 12 verlaufenden Wandabschnitt 24a auf, der in eine parallel dazu ausgerichtete Abstützstrebe 24b U-förmigen Querschnitts übergeht.

Der Wandabschnitt 24a endet in einer nach unten abgewinkelten Randleiste 24c, an der ein elastisches Dichtprofil 26 angeklebt ist. Das Dichtprofil 26 wirkt mit einem bis zur Windschutzscheibe 12 hochgezogenen Randwulst 18c der Dämmstoffschicht 18 zusammen. Ferner weist der Abschnitt 24a mehrere, durch Längsschlitze gebildete Ausströmöffnungen 24d für konditionierte Luft auf, die als Teil einer Defrostereinrichtung auf die Windschutzscheibe 12 in Höhe einer Parkposition außen angeordneter Scheibenwischer (nicht dargestellt) gerichtet sind.

Die Abstützstrebe 24b ist an deren nach unten ragender Stirnseite L-förmig gestaltet, wobei der nach unten ragende Schenkel 24e unter Zwischenschaltung eines weiteren, angeklebten Dichtprofils 26 als nach vorne wirkender Anschlag vorgesehen ist.

Die Abstützstrebe 24b stützt sich dabei an dem Eckbereich zwischen einer horizontal verlaufenden Außenkontur 18d und einer vertikal verlaufenden Außenkontur 18e der Dämmstoffschicht 18 des Scheibenquerträgers 14 wie ersichtlich ab.

Der die Ausströmöffnungen 24d mit Luft versorgende, quer verlaufende Defrosterkanal 28, der an die Klimatisierungseinrichtung des Kraftfahrzeuges in nicht dargestellter Weise angeschlossen ist, wird durch den oberen Wandabschnitt 24a, die darunter liegende Dämmstoffschicht 18 bzw. deren horizontale Außenkontur 18d und den zugewandten, vertikalen Wandabschnitt der Abstützstrebe 24b gebildet, wobei die Dichtprofile 26 den Defrosterkanal 28 im Verbindungsbereich luftdicht abschließen.

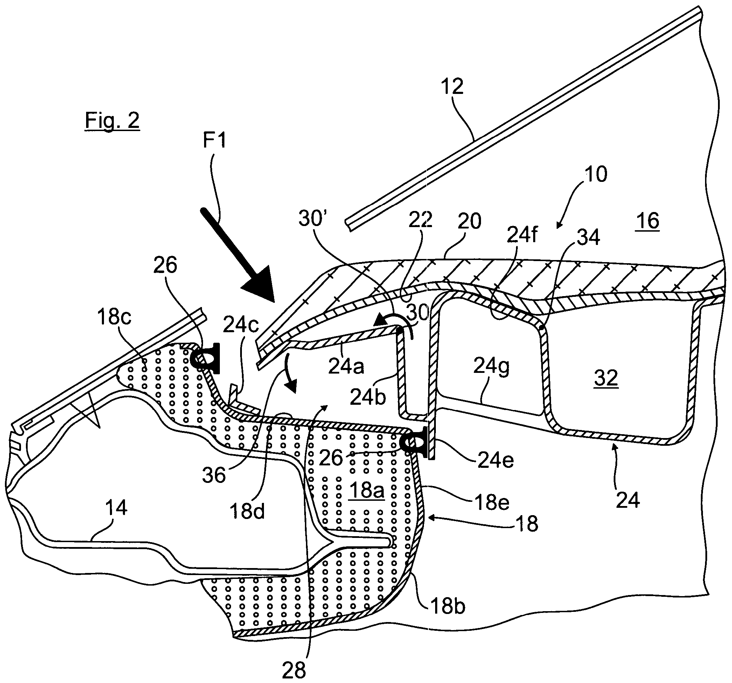

Durch die soweit beschriebene Konstruktion der Instrumententafel 10 kann der frei nach vorne zur Windschutzscheibe 12 ragende Wandabschnitt 24a der tragenden Unterstruktur 24 bei einer Aufprallkraft F1 von vorne oben in Richtung des Pfeils 30' um eine Schwenkachse 30 nach unten (Pfeil 36) abknicken (Fig. 2), wobei die einen definierten Abstand zur Windschutzscheibe 12 aufweisende Schwenkachse 30 im Anbindungs- bzw. Übergangsbereich zwischen dem horizontalen Wandabschnitt 24a und der vertikalen Abstützstrebe 24b liegt und sich im Wesentlichen über die gesamte Breite der Windschutzscheibe 12 erstreckt. Dieser Anbindungs- bzw. Übergangsbereich kann zur Ausbildung der Schwenkachse 30 gegebenenfalls materialschwächende, ein gezieltes Abknicken unterstützende Maßnahmen (Wanddicke, Einschnürungen, etc.) aufweisen. Die relevante Schwenkachse 30 ist hier im Bereich der relativ steifen Unterstruktur 24 vorgesehen, da die Abdeckung 22 bzw. die Verkleidung 20 aus einem ohnehin nachgiebigen und damit leicht verformbaren Material hergestellt sind, die dem Verschwenken lediglich einen geringen bzw. vernachlässigbaren Widerstand entgegensetzen.

Die Unterstruktur 24 weist im Querschnitt betrachtet einen weiteren, mit einem definierten Abstand hinter der Abstützstrebe 24b liegenden, zweiten und im Wesentlichen horizontal ausgerichteten Wandabschnitt 24f auf, der an einen zweiten Defrosterkanal 32 U-förmigen Querschnitts anschließt. Der zweite Defrosterkanal 32 ist ebenfalls an die Klimatisierungseinrichtung des Kraftfahrzeuges angeschlossen und führt über nicht dargestellte Ausströmöffnungen konditionierte Luft dem mittleren Bereich der Windschutzscheibe 12 zu (Ausströmöffnungen sind hier nicht dargestellt).

Zwischen den einander zugewandten, vertikalen Wandabschnitten der Abstützstrebe 24b und des zweiten Defrosterkanals 32 sind mehrere Verbindungsstreben 24g im Bereich deren Stirnwände angeformt, die eine definierte Aussteifung zwischen dem Abschnitt 24f und dem zweiten Defrosterkanal 32 bewirken.

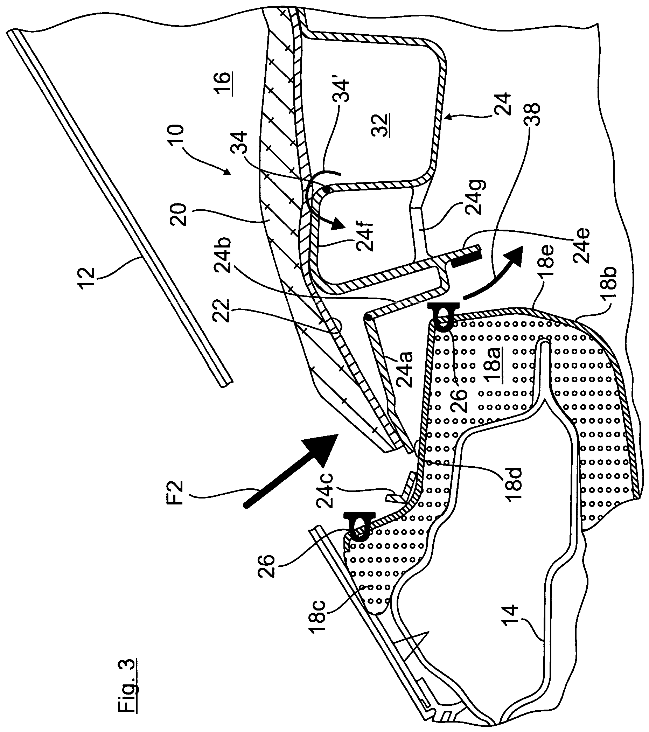

Die Verbindungsstreben 24g sind jedoch in ihrer Steifigkeit nur so ausgeführt, dass dennoch bei einer stärkeren Aufprallkraft F2 (F2 » F1) von oben auf die Instrumententafel 10 (Fig. 3) die Abstützstrebe 24b nach unten hinten vom Querträger 14 und der Dämmstoffschicht 18 abgleiten kann (Pfeil 38) und somit der weitere Abschnitt 24f in Richtung des Pfeils 34' um die Schwenkachse 34 nach unten abknicken kann. Die in einem zweiten, definierten Abstand zur ersten Schwenkachse 30 bzw. zur Windschutzscheibe 12 gebildete Schwenkachse 34 liegt dabei im Übergangsbereich zwischen dem horizontalen Abschnitt 24f der Unterstruktur 24 und dem anschließenden, vertikalen Wandabschnitt des Querkanals 32 und erstreckt sich ebenfalls im Wesentlichen über die gesamte Breite der Windschutzscheibe 12. Auch im Bereich der zweiten Schwenkachse 34 könnten gegebenenfalls materialschwächende Maßnahmen vorgesehen sein. Bezüglich der Schwenkachse 34 gilt darüber hinaus das zuvor zur Schwenkachse 30 Gesagte, nämlich, dass die Abdeckung 22 bzw. die Verkleidung 20 aus einem wenig widerstandsfähigen und damit leicht verformbaren bzw. leicht verschwenkbaren Material hergestellt sind.

## Patentansprüche

1. Anordnung einer Instrumententafel im Innenraum eines Kraftfahrzeuges, insbesondere eines Personenkraftfahrzeuges, bei der die an eine Windschutzscheibe angrenzende Instrumententafel im windschutzscheibennahen Bereich in Fahrzeughochachsenrichtung gesehen oberhalb einer Dämmstoffschicht, insbesondere oberhalb eines mit einer Dämmstoffschicht versehenen Scheibenquerträgers verläuft, wobei in Fahrzeughochachsenrichtung gesehen unterhalb der Instrumententafel wenigstens ein in Fahrzeugquerrichtung verlaufender Defrosterkanal ausgebildet ist, mittels dem der Windschutzscheibe über wenigstens eine der Windschutzscheibe zugeordnete Ausströmöffnung Luft zuführbar ist, **dadurch gekennzeichnet, dass** ein der Windschutzscheibe (12) zugewandter und einen Defrosterkanal-Wandbereich ausbildender Abschnitt der Instrumententafel (10) als ein sich an die wenigstens eine Ausströmöffnung (24d), in Richtung von der Windschutzscheibe (12) weg anschließender, den Kanalhohlraum des Defrosterkanals (28) überdeckender Wandabschnitt (24a) ausgebildet ist, der bei einer Kraftbeaufschlagung nach unten, in Richtung von der Windschutzscheibe (12) weg, um eine definierte, instrumententafelseitige Schwenkachse (30) in den Defrosterkanal (28) verschwenkt wird.

2. Anordnung nach Anspruch 1, **dadurch gekennzeichnet, dass** der Defrosterkanal (28) auf seiner der Windschutzscheibe (12) abgewandten Seite von einer in Fahrzeughochachsenrichtung nach unten abragenden Abstützstrebe (24b) der Instrumententafel (10) begrenzt ist, an der sich nach vorne zur Windschutzscheibe (12) hin der verschwenkbare und in etwa horizontal verlaufende Wandabschnitt (24a) anschließt, wobei die Schwenkachse (30) des verschwenkbaren Wandabschnittes (24a) im Anbindungsbereich des verschwenkbaren Wandabschnittes (24a) an der Abstützstrebe (24b) ausgebildet ist oder dort bei einer Kraftbeaufschlagung desselben ausbildbar ist.

3. Anordnung nach Anspruch 2, **dadurch gekennzeichnet, dass** die Abstützstrebe (24b) mit einem dem verschwenkbaren Wandabschnitt (24a) abgewandten Abstützbereich (24e) an die beabstandet unterhalb des verschwenkbaren Wandabschnittes (24a) verlaufende und ebenfalls eine Defrosterkanalwand ausbildende Dämmstoffschicht (18d) des Scheibenquerträgers (14) angrenzt.

4. Anordnung nach Anspruch 3 , **dadurch gekennzeichnet, dass** die im Querschnitt etwa U-förmige Abstützstrebe (24b) der Instrumententafel (10) mit einem bezogen auf die Fahrzeughochachsenrichtung unteren Abstützbereich an der Dämmstoffschicht (18) des Scheibenquerträgers (14) abgestützt ist.

5. Anordnung nach Anspruch 3 oder 4, **dadurch gekennzeichnet, dass** der untere Abstützbereich der Abstützstrebe (24b) im Querschnitt L-förmig mit einem nach unten abragenden Schenkel (24e) ausgeführt ist, der an einer in etwa vertikalen Außenkontur (18e) eines querverlaufenden Eckbereichs der Dämmstoffschicht (18) des Scheibenquerträgers (14) anliegt.

6. Anordnung nach einem der Ansprüche 3 bis 5, **dadurch gekennzeichnet, dass** zwischen der Abstützstrebe (24b) und der Dämmstoffschicht (18) ein den Defrosterkanal (28) abdichtendes Dichtprofil (26) eingesetzt ist.

7. Anordnung nach einem der vorhergehenden Ansprüche, **dadurch gekennzeichnet, dass** der verschwenkbare Wandabschnitt (24a) der Instrumententafel (10) um eine Schwenkachse (30) verschwenkbar ist, die etwa horizontal und/oder im wesentlichen über die gesamte Breite der Instrumententafel (10) verläuft.

8. Anordnung nach einem der vorhergehenden Ansprüche, **dadurch gekennzeichnet, dass** der verschwenkbare Wandabschnitt (24a, 24f) Bestandteil einer Trag- und/oder Unterstruktur (24) der Instrumententafel (10) ist, die bevorzugt materialeinheitlich und/oder einstückig und/oder mit einer flächigen Abdeckung (22) ausgebildet ist.

9. Anordnung nach einem der Ansprüche 2 bis 8, **dadurch gekennzeichnet,**
**dass** in einem definierten Abstand von der Abstützstrebe (24b) ein, bezogen auf die Anordnung der Windschutzscheibe (12), hinter der Abstützstrebe (24b) angeordneter weiterer Luftkanal (32), insbesondere ein zweiter Defrosterkanal, für eine Luftzuführung zur Windschutzscheibe (12) vorgesehen ist, und
**dass** in einem Übergangsbereich von einem hinter der Abstützstrebe (24b) liegenden, zweiten, flächigen Wandabschnitt (24f) der Instrumententafel (10) und dem weiteren Luftkanal (32) eine zweite Schwenkachse (34) ausgebildet ist oder dort ausbildbar ist, um die der in Richtung zur Windschutzscheibe (12) davor liegende Bereich (24a, 24b, 24f) der Instrumententafel (10) als verschwenkbarer Wandabschnitt bei einer definierten Kraftbeaufschlagung der Instrumententafel (10), insbesondere bei höheren Aufprallkräften und/oder bei einer kraftbedingt nachgebenden Abstützstrebe (24b), nach unten, in Richtung von der Windschutzscheibe (12) weg, verschwenkbar ist.

10. Anordnung nach Anspruch 8 oder 9, **dadurch gekennzeichnet, dass** die Abstützstrebe (24b) und/oder der weitere Luftkanal (32) an die Trag- und/oder Unterstruktur (24) der Instrumententafel (10) angebunden ist bzw. sind, vorzugsweise aus- und/oder angeformter integraler Bestandteil der Trag- und/oder Unterstruktur (24) der Instrumententafel (10) ist bzw. sind.

11. Anordnung nach Anspruch 9 oder 10, **dadurch gekennzeichnet, dass** zwischen den einander zugewandten Vertikalwänden der Abstützstrebe (24b) und des weiteren Luftkanals (32) wenigstens ein Verbindungssteg (24g) angeordnet ist, der vorzugsweise integraler Bestandteil einer Trag- und/oder Unterstruktur (24) der Instrumententafel (10) ist.

12. Anordnung nach einem der vorhergehenden Ansprüche, **dadurch gekennzeichnet, dass** eine sich in Richtung zur Windschutzscheibe (12) hin an die wenigstens eine Ausströmöffnung (24d) anschließende sowie quer verlaufende Randleiste (24c) vorgesehen ist, die Bestandteil der Instrumententafel (10) ist und die an einer nach vorne zur Windschutzscheibe (12) hin ausgerichteten und/oder dort unmittelbar oder mit einem definierten Spaltabstand angrenzenden Randwulst (18c) der Dämmstoffschicht (18) abgestützt ist.

13. Anordnung nach Anspruch 12, **dadurch gekennzeichnet, dass** die abgewinkelt angeformte Randleiste (24c) des Abschnittes (24a) über ein elastisches Dichtprofil (26) an der Randwulst (18c) der Dämmstoffschicht (18) dicht anliegt.

## Claims

1. Arrangement of an instrument panel in the inner space of a motor vehicle, in particular a passenger vehicle, in which the instrument panel which adjoins a windscreen in the region close to the windscreen when viewed in the direction of the vertical axis of the vehicle extends above an insulation layer, in particular above a transverse windscreen carrier which is provided with an insulation layer, wherein, when viewed in the direction of the vertical axis of the vehicle, there is formed below the instrument panel at least one defroster channel which extends in the transverse direction of the vehicle and by means of which air can be supplied to the windscreen via at least one outlet opening which is associated with the windscreen, **characterised in that** a portion of the instrument panel (10), which portion faces the windscreen (12) and forms a defroster channel wall region, is constructed as a wall portion (24a) which adjoins the at least one outlet opening (24d) in the direction away from the windscreen (12) and which covers the hollow channel space of the defroster channel (28) and which, when acted on by a force in a downward direction, is pivoted in the direction away from the windscreen (12) about a defined pivot axis (30) at the instrument panel side into the defroster channel (28).

2. Arrangement according to claim 1, **characterised in that** the defroster channel (28) is delimited at the side thereof facing away from the windscreen (12) by a support strut (24b) of the instrument panel (10), which support strut protrudes downwards in the direction of the vertical axis of the vehicle and is adjoined at the front in the direction towards the windscreen (12) by the pivotable wall portion (24a) which extends substantially horizontally, wherein the pivot axis (30) of the pivotable wall portion (24a) is constructed in the connection region of the pivotable wall portion (24a) on the support strut (24b) or can be constructed at that location in the event of an application of force thereto.

3. Arrangement according to claim 2, **characterised in that** the support strut (24b) adjoins with a support region (24e) which faces away from the pivotable wall portion (24a) the insulation layer (18d) of the transverse windscreen carrier (14), which layer extends with spacing below the pivotable wall portion (24a) and also forms a defroster channel wall.

4. Arrangement according to claim 3, **characterised in that** the support strut (24b) of the instrument panel (10), which strut is substantially U-shaped in cross-section, is supported with a lower support region with respect to the direction of the vertical axis of the vehicle on the insulation layer (18) of the transverse windscreen carrier (14).

5. Arrangement according to claim 3 or claim 4, **characterised in that** the lower support region of the support strut (24b) is constructed so as to be L-shaped in cross-section with a downwardly protruding member (24e) which is in abutment with a substantially vertical outer contour (18e) of a transversely extending corner region of the insulation layer (18) of the transverse windscreen carrier (14).

6. Arrangement according to any one of claims 3 to 5, **characterised in that** a sealing profile (26) which seals the defroster channel (28) is inserted between the support strut (24b) and the insulation layer (18).

7. Arrangement according to any one of the preceding claims, **characterised in that** the pivotable wall portion (24a) of the instrument panel (10) can be pivoted about a pivot axis (30) which extends substantially horizontally and/or substantially over the entire width of the instrument panel (10).

8. Arrangement according to any one of the preceding claims, **characterised in that** the pivotable wall portion (24a, 24f) is a component of a carrier structure and/or substructure (24) of the instrument panel (10) which is preferably constructed in a materially uniform and/or integral manner and/or with a planar cover (22).

9. Arrangement according to any one of claims 2 to 8, **characterised in that** there is provided with a defined spacing from the support strut (24b) an additional air channel (32), in particular a second defroster channel, which is arranged behind the support strut (24b) with respect to the arrangement of the windscreen (12) for an air supply to the windscreen (12),
and **in that** in a transition region from a second planar wall portion (24f) of the instrument panel (10), which portion is located behind the support strut (24b), and the additional air channel (32) there is constructed or can be constructed at that location a second pivot axis (34), about which the region (24a, 24b, 24f) of the instrument panel (10) located in front in the direction towards the windscreen (12), as a pivotable wall portion in the event of a defined application of force to the instrument panel (10), in particular in the event of relatively high impact forces and/or in the event of a support strut (24b) giving way as a result of force, can be pivoted downwards in the direction away from the windscreen (12).

10. Arrangement according to claim 8 or 9, **characterised in that** the support strut (24b) and/or the additional air channel (32) is/are connected to the carrier structure and/or the substructure (24) of the instrument panel (10), preferably is/are a formed and/or formed-on integral component of the carrier structure and/or substructure (24) of the instrument panel (10).

11. Arrangement according to claim 9 or 10, **characterised in that**, between the mutually facing vertical walls of the support strut (24b) and the additional air channel (32), there is arranged at least one connection web (24g) which is preferably an integral component of a carrier structure and/or substructure (24) of the instrument panel (10).

12. Arrangement according to any one of the preceding claims, **characterised in that** there is provided a transversely extending edge strip (24c) which adjoins the at least one outlet opening (24d) in the direction towards the windscreen (12) and which is a component of the instrument panel (10) and which is supported on an edge bead (18c) of the insulation layer (18), which bead is orientated forwards in the direction towards the windscreen (12) and/or is adjacent directly or with a defined gap spacing at that location.

13. Arrangement according to claim 12, **characterised in that** the edge strip (24c) of the portion (24a), which strip is formed-on in an angled manner, is in close abutment via a resilient sealing profile (26) with the edge bead (18c) of the insulation layer (18).

## Revendications

1. Agencement d'un tableau de bord dans l'habitacle d'un véhicule automobile, notamment d'une voiture particulière, selon lequel le tableau de bord adjacent à un pare-brise s'étend dans la zone proche du pare-brise, vu dans la direction de l'axe vertical du véhicule, au-dessus d'une couche de matériau isolant, notamment au-dessus d'une traverse de vitre munie d'une couche de matériau isolant, au moins un canal de dégivrage qui s'étend dans la direction transversale du véhicule et au moyen duquel de l'air peut être amené au pare-brise par l'intermédiaire d'au moins un orifice de sortie associé au pare-brise étant conçu, vu dans la direction de l'axe vertical du véhicule, au-dessous du tableau de bord, **caractérisé en ce qu'**une partie du tableau de bord (10), partie proche du pare-brise (12) et formant une zone de paroi de canal de dégivrage, est conçue comme une partie de paroi (24a) qui fait suite à l'au moins un orifice de sortie (24d) en s'éloignant du pare-brise (12), qui recouvre l'espace creux du canal de dégivrage (28) et qui, lors de l'application d'une force vers le bas, dans la direction allant à l'opposé du pare-brise (12), pivote dans le canal de dégivrage (28) autour d'un axe de pivotement (30) défini, du côté du tableau de bord.

2. Agencement selon la revendication 1, **caractérisé en ce que** le canal de dégivrage (28) est délimité, de son côté éloigné du pare-brise (12), par une barre d'appui (24b) du tableau de bord (10), laquelle barre d'appui dépasse vers le bas dans la direction de l'axe vertical du véhicule et est suivie, vers l'avant en direction du pare-brise (12), par la partie de paroi (24a) pivotante qui s'étend globalement horizontalement, l'axe de pivotement (30) de la partie de paroi pivotante (24a) étant conçu dans la zone de liaison de la partie de paroi pivotante (24a) à la barre d'appui (24b) ou pouvant être conçu là lors d'une application de force sur ladite partie de paroi.

3. Agencement selon la revendication 2, **caractérisé en ce que** la barre d'appui (24b) est adjacente, avec une zone d'appui (24e) éloignée de la partie de paroi pivotante (24a), à la couche de matériau isolant (18d) de la traverse de vitre (14), laquelle couche de matériau isolant s'étend à une certaine distance en dessous de la partie de paroi pivotante (24a) et forme également une paroi de canal de dégivrage.

4. Agencement selon la revendication 3, **caractérisé en ce que** la barre d'appui (24b), avec sa section transversale sensiblement en forme de U, du tableau de bord (10) s'appuie avec une zone d'appui inférieure, par rapport à la direction de l'axe vertical du véhicule, contre la couche de matériau isolant (18) de la traverse de vitre (14).

5. Agencement selon la revendication 3 ou 4, **caractérisé en ce que** la zone d'appui inférieure de la traverse d'appui (24b) est réalisée avec une section transversale en forme de L avec un côté (24e) qui dépasse vers le bas et qui se trouve contre un contour extérieur (18e) sensiblement vertical d'une zone d'angle transversale de la couche de matériau isolant (18) de la traverse de vitre (14).

6. Agencement selon l'une des revendications 3 à 5, **caractérisé en ce qu'**un profilé d'étanchéité (26) rendant étanche le canal de dégivrage (28) est placé entre la barre d'appui (24b) et la couche de matériau isolant (18).

7. Agencement selon l'une des revendications précédentes, **caractérisé en ce que** la partie de paroi pivotante (24a) du tableau de bord (10) est pivotante autour d'un axe de pivotement (30) qui s'étend globalement horizontalement et/ou sensiblement sur toute la largeur du tableau de bord (10).

8. Agencement selon l'une des revendications précédentes, **caractérisé en ce que** la partie de paroi pivotante (24a, 24f) fait partie d'une structure porteuse et/ou inférieure (24) du tableau de bord (10) qui est conçue de préférence avec un seul matériau et/ou d'un seul tenant et/ou avec un revêtement surfacique (22).

9. Agencement selon l'une des revendications 2 à 8, **caractérisé en ce que**
- à une distance définie de la barre d'appui (24b), un autre canal d'air (32), notamment un deuxième canal de dégivrage, agencé derrière, par rapport à l'agencement du pare-brise (12), la barre d'appui (24b) est prévu pour une arrivée d'air jusqu'au pare-brise (12), et
- un deuxième axe de pivotement (34) est formé ou peut être formé dans une zone de transition d'une deuxième partie de paroi surfacique (24f), située derrière la barre d'appui (24b), du tableau de bord (10) à l'autre canal d'air (32), deuxième axe de pivotement autour duquel la zone (24a, 24b, 24f) du tableau de bord (10) qui est située devant en direction du pare-brise (12) peut, en tant que partie de paroi pivotante, pivoter vers le bas dans la direction allant à l'opposé du pare-brise (12) lors d'une application de force définie sur le tableau de bord (10), notamment en présence de grandes forces de choc et/ou en présence d'un fléchissement de la barre d'appui (24b) à cause d'une force.

10. Agencement selon la revendication 8 ou 9, **caractérisé en ce que** la barre d'appui (24b) et/ou l'autre canal d'air (32) sont liés à la structure porteuse et/ou inférieure (24) du tableau de bord (10), de préférence sont parties intégrantes de la structure porteuse et/ou inférieure (24) du tableau de bord (10) en étant formées à partir de ou sur celle-ci.

11. Agencement selon la revendication 9 ou 10, **caractérisé en ce qu'**au moins une traverse de liaison (24g) qui est de préférence partie intégrante d'une structure porteuse et/ou inférieure (24) du tableau de bord (10) est agencée entre les parois verticales, proches l'une de l'autre, de la barre d'appui (24b) et de l'autre canal d'air (32).

12. Agencement selon l'une des revendications précédentes, **caractérisé en ce qu'**il est prévu une baguette de bord (24c) qui fait suite à l'au moins un orifice de sortie (24d) en direction du pare-brise (12), qui s'étend transversalement, qui fait partie du tableau de bord (10) et qui s'appuie contre un bourrelet de bord (18c) de la couche de matériau isolant (18) qui est orienté vers l'avant en direction du pare-brise (12) et/ou est adjacent à ce niveau directement ou à une distance définie.

13. Agencement selon la revendication 12, **caractérisé en ce que** la baguette de bord (24c), formée coudée, de la partie (24a) s'appuie de manière étanche contre le bourrelet de bord (18c) de la couche de matériau isolant (18) par l'intermédiaire d'un profilé d'étanchéité élastique (26).
